# EUROPEAN PATENT APPLICATION

(11) **EP 4 700 587 A1**
(43) Date of publication of application: **25.02.2026**
(21) Application number: 23934090.4
(22) Date of filing: 20.04.2023
(51) Int. Cl.: G06F 12/00, G06F 11/30

(54) **VEHICLE CONTROL DEVICE**

(71) Applicant: Astemo, Ltd., Chiyoda-ku, Tokyo 1000004 (JP)
(72) Inventor: IKEDA Yasuhiro, Hitachinaka-shi, Ibaraki 312-8503 (JP); SAKAMOTO Hideyuki, Hitachinaka-shi, Ibaraki 312-8503 (JP); SOBUE Tsuneo, Hitachinaka-shi, Ibaraki 312-8503 (JP); NOKAIDO Takaaki, Hitachinaka-shi, Ibaraki 312-8503 (JP)
(74) Representative: MERH-IP Matias Erny Reichl Hoffmann Patentanwälte PartG mbB
(86) International application number: PCT/JP2023/015799
(87) International publication number: WO 2024/218945

(57) **Abstract**

An object of the present invention is to obtain a vehicle control device capable of reducing a processing load of an in-vehicle electronic control device (100), acquiring diagnostic log information of a nonvolatile memory (110) in an actual environment, and grasping a lifespan of the nonvolatile memory. The vehicle control device of the present invention acquires the diagnostic log information of the nonvolatile memory in order to monitor the lifespan of the nonvolatile memory in a vehicle control system equipped with the nonvolatile memory. At this time, the acquisition of the diagnostic log information is determined in response to communication with a server (300) that is an off-vehicle device.

## Description

### Technical Field

The present invention relates to a vehicle control device.

### Background Art

With the advancement of high-performance and connected automobiles, services and businesses based on data utilization have attracted attention. Integration of a plurality of vehicle control devices (electronic control units (ECUs)) mounted on a vehicle is progressing, and the amount of data handled by each ECU is on the rise. In order to utilize vehicle data, it is necessary to retain in-vehicle data and off-vehicle data in an in-vehicle storage, and it is conceivable to use a nonvolatile memory for the in-vehicle storage. For example, as communication between the ECU and an off-vehicle system increases, the opportunity to utilize the vehicle data increases, and the frequency of access to the nonvolatile memory in the vehicle and the amount of data increase.

The nonvolatile memory has a limitation on the number of program/erase (P/E) cycles, and there is a problem that the lifespan varies significantly depending on the actual environment such as the access frequency, usage patterns, and a temperature. Therefore, it is necessary to grasp the lifespan of the nonvolatile memory in an actual use state. For example, PTL 1 discloses a method of grasping a lifespan of a nonvolatile memory.

The abstract of PTL 1 discloses that "Determination of a consumption state of a memory during use is performed at an appropriate frequency in a memory diagnosis device. The memory diagnosis device includes an access status observation unit, a consumption information acquisition unit, and a consumption state determination unit. The access status observation unit observes a status of access to the memory. The consumption information acquisition unit acquires consumption information from the memory at a frequency according to the observed status of the access. The consumption state determination unit determines the consumption state of the memory based on the consumption information acquired by the consumption information acquisition unit".

### Citation List

### Patent Literature

PTL 1: WO 2020/161981 A

### Summary of Invention

### Technical Problem

In the technology described in PTL 1, the status of the access to the memory is constantly observed. Therefore, in a case where such a technology is applied to an in-vehicle electronic control device (a computation processing device such as a system on a chip (SoC) or a microcomputer), there is a problem that a processing load becomes high with a limited computation processing capability of the in-vehicle electronic control device.

The present invention has been made in view of the above points, and an object of the present invention is to obtain a vehicle control device capable of reducing a processing load of an in-vehicle electronic control device, acquiring diagnostic log information of a nonvolatile memory in an actual environment, and grasping a lifespan of the nonvolatile memory.

### Solution to Problem

In order to solve the above problem, a vehicle control device of the present invention is a vehicle control device connected to a communication device that communicates with an off-vehicle device, the vehicle control device including:
a storage unit that includes a nonvolatile memory;
a command processing unit that issues a command to the storage unit;
an input/output unit that exchanges information with the storage unit based on the command issued by the command processing unit;
an off-vehicle communication request processing unit that performs processing on an off-vehicle communication request for an off-vehicle device; and
a log acquisition unit that acquires diagnostic log information output from the storage unit by the input/output unit, in which
the log acquisition unit determines whether or not it is necessary to acquire the diagnostic log information of the storage unit in response to the off-vehicle communication request with the off-vehicle device, and
in a case where the log acquisition unit determines that it is necessary to acquire the diagnostic log information of the storage unit, the command processing unit issues a second command for acquiring the diagnostic log information of the storage unit by adding the second command to a first command for exchanging information according to the off-vehicle communication request with the off-vehicle device.

### Advantageous Effects of Invention

According to the present invention, it is possible to reduce a processing load of the vehicle control device, to grasp a lifespan of a nonvolatile memory, and to implement high reliability of the nonvolatile memory. Further features related to the present invention will become apparent from the description of the present specification and the accompanying drawings. Problems, configurations, and effects other than those described above will be clarified by the following description of embodiments.

### Brief Description of Drawings

[FIG. 1] FIG. 1 is a diagram illustrating a configuration example of an information communication system to which a vehicle control device according to a first embodiment of the present invention is applied.
[FIG. 2] FIG. 2 is a diagram illustrating an example of an operation flow of the vehicle control device according to the first embodiment of the present invention.
[FIG. 3] FIG. 3 is a diagram illustrating an example of an operation flow of a log acquisition unit of the vehicle control device according to the first embodiment of the present invention.
[FIG. 4] FIG. 4 is a diagram illustrating a configuration example of an information communication system to which a vehicle control device according to a second embodiment of the present invention is applied.
[FIG. 5] FIG. 5 is a diagram illustrating an example of an operation flow of a log acquisition unit of the vehicle control device according to the second embodiment of the present invention.
[FIG. 6] FIG. 6 is a graph illustrating a relationship between information acquired by the log acquisition unit of the vehicle control device according to the second embodiment of the present invention and the number of times of acquisition.
[FIG. 7] FIG. 7 is a diagram illustrating a configuration example of an information communication system to which a vehicle control device according to a third embodiment of the present invention is applied.
[FIG. 8] FIG. 8 is a diagram illustrating an example of an operation flow of a log acquisition unit of the vehicle control device according to the third embodiment of the present invention.
[FIG. 9] FIG. 9 is a diagram illustrating an example of a diagnosis timing in a diagnosis unit of the vehicle control device according to the third embodiment of the present invention.
[FIG. 10] FIG. 10 is a diagram for describing an example of a diagnosis method in a diagnosis unit of a vehicle control device according to a fourth embodiment of the present invention.
[FIG. 11] FIG. 11 is a diagram illustrating a configuration example of an information communication system to which a vehicle control device according to a fifth embodiment of the present invention is applied.
[FIG. 12] FIG. 12 is a diagram illustrating a configuration example of an information communication system to which a vehicle control device according to a sixth embodiment of the present invention is applied.
[FIG. 13] FIG. 13 is a diagram illustrating a configuration example of an information communication system to which a vehicle control device according to a seventh embodiment of the present invention is applied.

### Description of Embodiments

Hereinafter, embodiments of a storage state monitoring system of a vehicle control device according to the present embodiment will be described with reference to the drawings. However, the embodiments described below are merely examples, and there is no intention to exclude the application of various modified examples and technologies that are not explicitly described in the embodiments. That is, the present embodiment can be variously modified and implemented without departing from the gist thereof. In addition, each figure is not intended to include only the components illustrated in the figure, and may include other functions and the like.

### [First Embodiment]

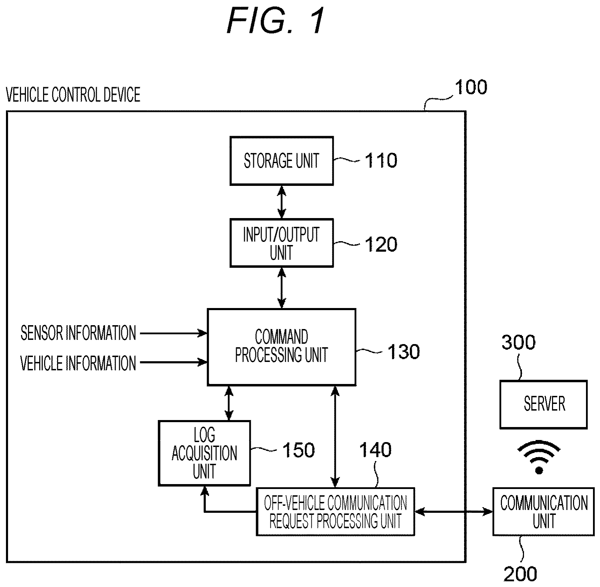

FIG. 1 is a diagram illustrating a configuration example of an information communication system to which a vehicle control device according to a first embodiment is applied.

A vehicle control device 100 forms an information communication system in cooperation with an off-vehicle device disposed outside a vehicle. In the present embodiment, a case where the off-vehicle device is a server 300 will be described as an example, but the off-vehicle device may be implemented by a personal computer (PC) or a cloud. In the information communication system, data is transmitted and received between the server 300 and the vehicle control device 100, and for example, an update program is provided from the server 300 to the vehicle control device 100, and vehicle information is provided from the vehicle control device 100 to the server 300.

Communication between the vehicle control device 100 and the server 300 is performed by a communication unit (communication device) 200 disposed in the vehicle. The communication unit 200 performs wired communication with the vehicle control device 100 and performs wireless communication with the server 300.

The vehicle control device 100 is implemented by an electronic control unit (ECU) including a system on chip (SoC) and a nonvolatile memory. The Soc includes a microprocessor, an input/output (I/O), and a memory that stores programs and data. In the vehicle control device 100, respective functions illustrated in FIG. 1 are implemented by executing a program in the memory by the microprocessor of the SoC.

The vehicle control device 100 includes, as the respective functions, a storage unit 110, an input/output unit 120, a command processing unit 130, an off-vehicle communication request processing unit 140, and a log acquisition unit 150.

The storage unit 110 includes a nonvolatile memory such as a NAND flash memory. The storage unit 110 stores the vehicle information and sensor information used for vehicle control, information provided from the server 300, and the like in a writable and readable manner. In addition, respective commands such as write, read, and erase, and information such as a total access data amount (a total written data amount and a total read data amount), an error count, and a memory temperature are recorded in the storage unit 110 as log information.

The input/output unit 120 accesses the storage unit 110 based on a command issued by the command processing unit 130 and exchanges information with the storage unit 110.

The command processing unit 130 issues a command to the storage unit 110. The command processing unit 130 issues a command for reading and writing the sensor information and the vehicle information from and to the storage unit 110. In addition, the command processing unit 130 can issue a request command (hereinafter, referred to as first command) for exchanging information according to an off-vehicle communication request with the server 300 and a log acquisition command (hereinafter, referred to as second command) for acquiring diagnostic log information of the storage unit 110.

The command processing unit 130 issues the first command in a case where there is an off-vehicle communication request between the vehicle control device 100 and the server 300. Then, in a case where the log acquisition unit 150 determines that it is necessary to acquire the diagnostic log information of the storage unit 110, the second command is added to the first command and issued. The second command includes, for example, a command to acquire a self-test result of the storage unit 110 or the diagnostic log information such as S.M.A.R.T. (self-monitoring, analysis, and reporting technology) from the storage unit 110.

The off-vehicle communication request processing unit 140 transmits and receives information to and from the server 300 by communicating with the communication unit 200, and performs processing on the off-vehicle communication request with the server 300. When communicating with the server 300, the off-vehicle communication request processing unit 140 notifies the log acquisition unit 150 and the command processing unit 130 that the off-vehicle communication request with the server 300 has been received.

The log acquisition unit 150 determines whether or not it is necessary to acquire the diagnostic log information of the storage unit 110 in response to the off-vehicle communication request with the server 300. A result of the necessity determination is input to the command processing unit 130, and is used to determine whether or not to additionally issue the second command in the command processing unit 130. For example, the number of communications with the server 300, a type of the first command, and the like can be used for determining, by the log acquisition unit 150, whether or not it is necessary to acquire the diagnostic log information. The log acquisition unit 150 acquires the diagnostic log information output from the storage unit 110.

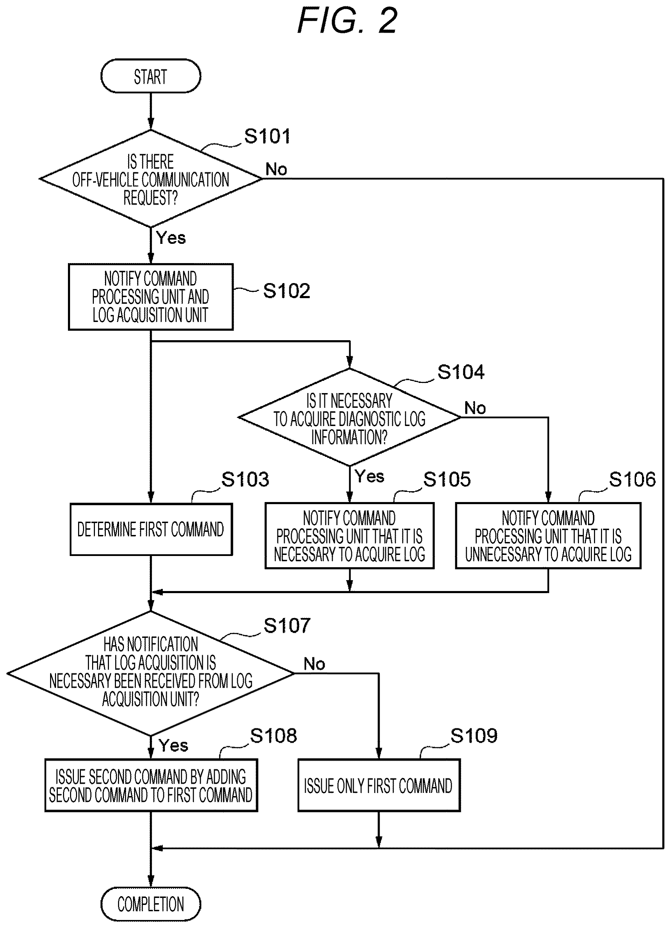

FIG. 2 is a diagram illustrating an example of an operation flow of the vehicle control device according to the first embodiment.

In the following example, a case where the off-vehicle communication request has been received from the server 300 will be described as an example.

When it is determined that there is an off-vehicle communication request from the server 300 (YES in S101), the off-vehicle communication request processing unit 140 of the vehicle control device 100 notifies the command processing unit 130 and the log acquisition unit 150 that there is an off-vehicle communication request (S102).

Upon receiving the notification that there is an off-vehicle communication request, the command processing unit 130 of the vehicle control device 100 determines the first command for exchanging information according to the communication request (S103).

On the other hand, upon receiving the notification that there is an off-vehicle communication request, the log acquisition unit 150 of the vehicle control device 100 determines whether or not it is necessary to acquire the diagnostic log information from the storage unit 110 in response to the notification (S104) (acquisition determination step). The log acquisition unit 150 determines whether or not to acquire the diagnostic log information of the storage unit 110 based on, for example, the number of communications with the server 300 and the type of the first command determined in S103.

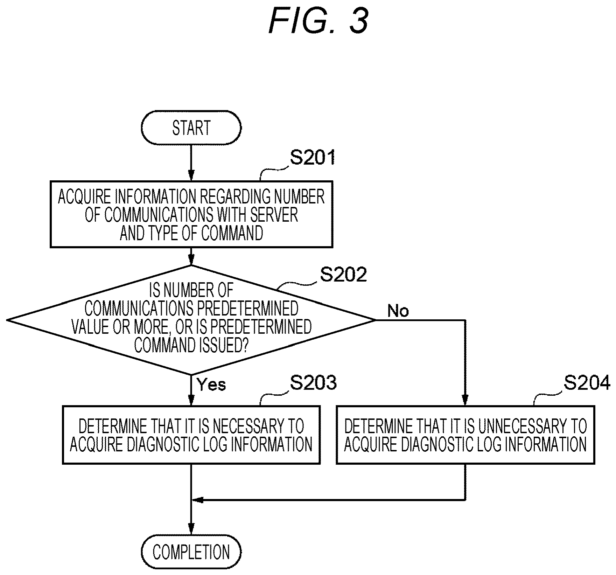

FIG. 3 is a diagram illustrating an example of an operation flow of the log acquisition unit of the vehicle control device according to the first embodiment of the present invention.

The log acquisition unit 150 acquires at least one of the number of communications with the server 300 and the type of the first command (S201). Then, it is determined whether or not at least one of a condition (1) that the number of communications with the server 300 is a predetermined value or more, and a condition (2) that the type of the first command is erase among read, write, and erase is satisfied (S202). In a case where at least one condition is satisfied, it is determined that it is necessary to acquire the diagnostic log information (S203), and in a case where none of the conditions is satisfied, it is determined that it is unnecessary to acquire the diagnostic log information (S204).

Returning to the description of FIG. 2 again, in a case where it is determined in S104 that it is necessary to acquire the diagnostic log information (YES in S104), the log acquisition unit 150 notifies the command processing unit 130 that log acquisition is necessary (S105). On the other hand, in a case where it is determined in S104 that it is unnecessary to acquire the diagnostic log information (NO in S104), the log acquisition unit 150 notifies the command processing unit 130 that log acquisition is unnecessary (S106).

The command processing unit 130 of the vehicle control device 100 determines whether or not the notification that log acquisition is necessary has been received from the log acquisition unit 150 (S107). In a case where the notification that log acquisition is necessary has been received (YES in S107), the second command for instructing acquisition of the diagnostic log information of the storage unit 110 is added to the first command determined in step S103 and issued (S108). On the other hand, in a case where the notification that log acquisition is unnecessary has been received from the log acquisition unit 150 (NO in S107), the command processing unit 130 issues only the first command (S109).

Upon receiving the first command from the command processing unit 130, the input/output unit 120 accesses the storage unit 110 to exchange information with the storage unit 110, and acquires requested data requested by the first command from the storage unit 110. Then, in a case where the second command is added to the first command, the requested data is acquired from the storage unit 110, and at the same time, the diagnostic log information requested by the second command is acquired (diagnostic log information acquisition step) and provided to the command processing unit 130.

The requested data acquired from the storage unit 110 and provided to the command processing unit 130 is transmitted to the server 300 by the off-vehicle communication request processing unit 140. On the other hand, the diagnostic log information acquired from the storage unit 110 and provided to the command processing unit 130 is stored in the log acquisition unit 150, and is used for the subsequent determination of acquisition of the diagnostic log information in the log acquisition unit 150.

The above example is an example of a case where there is a communication request from the server 300 to the vehicle control device 100, but a case of communication from the vehicle control device 100 to the server 300 can be similarly considered.

With the vehicle control device 100 of the present embodiment, it is determined whether or not to acquire the diagnostic log information of the storage unit 110 including the nonvolatile memory in response to the off-vehicle communication request with the server 300 by the above-described configuration and operation flow. Therefore, it is possible to acquire the diagnostic log information at irregular timings, diagnose a degradation state of the storage unit 110 by using the acquired diagnostic log information, and grasp a lifespan.

Regular and irregular writing and reading of data generated in the vehicle to and from the nonvolatile memory can be assumed in the design phase. However, in the increasingly frequent communication with an off-vehicle system, an access occurs after the design phase and is irregular, which makes it difficult to predict a data amount in the design phase. In the vehicle control device 100 of the present embodiment, the diagnostic log information of the storage unit 500 is acquired in response to the off-vehicle communication request with the server 300, and thus, diagnosis can be performed irregularly, and diagnosis according to an actual situation can be performed.

Since the nonvolatile memory is degraded in each operation (write, read, or erase), it is necessary to select issuance of the log acquisition command in response to the off-vehicle communication request after the design phase of the vehicle instead of excessively issuing the log acquisition command. With the vehicle control device 100 of the present embodiment, it is possible to suppress excessive issuance of the log acquisition command (second command).

The vehicle control device 100 of the present embodiment acquires the diagnostic log information (including a diagnosis test result) of the storage unit 110 in order to monitor the lifespan of the storage unit 110 including the nonvolatile memory. At this time, the diagnostic log information is not acquired at or by a frequency or a trigger determined according to an access situation observed by monitoring all pieces of access data to the storage unit 110 as in the related art, and the acquisition of the diagnostic log information is determined in response to communication with the server 300.

As a result, a processing load of the vehicle control device 100 which is an in-vehicle electronic control device can be reduced, a data communication amount with the server 300 and a command type (sequential write, random write, sequential read, random read, or the like) can be grasped, and the diagnostic log information of the nonvolatile memory in the actual environment can be acquired, so that the lifespan of the nonvolatile memory can be grasped.

In the related art, a status (data amount) of access to the nonvolatile memory is constantly monitored to determine a diagnosis frequency. In information equipment such as a server, not only are computational resources abundant, but memory utilization is also a priority. However, in the vehicle control device (ECU) as in the present embodiment, vehicle control is prioritized, and it is necessary to prevent resources for the vehicle control from being taken up by memory diagnosis.

Further, in order to grasp the lifespan of the nonvolatile memory, a Read operation of reading the diagnostic log information and the self-test result from the nonvolatile memory is required. However, the Read operation causes degradation of the nonvolatile memory to proceed, and there is a problem that access efficiency is reduced due to contention between the Read operation and a Write operation (such as log writing for the vehicle data) that is to be prioritized in an in-vehicle storage. In order to efficiently diagnose the nonvolatile memory, reduction of the number of times of issuance of a diagnosis command (Read) and avoidance of contention between the Write operation and the Read operation are important, that is, the number of times and timings of command issuance are important.

With the vehicle control device 100 of the present embodiment, the second command is added to the first command in response to the off-vehicle communication request with the server 300, and the diagnostic log information requested by the second command is acquired together with the requested data requested by the first command. A timing for processing the off-vehicle communication request is a timing corresponding to a gap in which the vehicle information and the sensor information are not written. That is, a bus in the ECU is occupied when the diagnostic log information is acquired from the storage unit 110, but by issuing the second command by adding the second command to the first command, a timing of the occupation can be matched with a communication processing timing with the server 300 and can be shifted from the timing for processing the in-vehicle communication request.

As a result, the bus of the ECU can be used without hindering the vehicle control prioritized by the vehicle control device and recording (Write operation) of the in-vehicle data in the storage unit 110, and the diagnostic log information can be efficiently read at a timing suitable for diagnosis of the storage unit 110. Therefore, it is possible to perform efficient memory diagnosis while suppressing a reduction in access efficiency to the storage unit 110, and it is possible to achieve both a long lifespan and a high reliability of the storage unit 110.

In addition, with the vehicle control device 100 of the present embodiment, the diagnostic log information can be acquired at irregular timings, and it is not necessary to perform constant monitoring as in the related art. Therefore, it is possible to prevent consumption of computational resources of the electronic control device (a device such as a CPU, a SoC, or a microcomputer) and to achieve a reduction in processing load of the in-vehicle electronic control device.

### [Second Embodiment]

Next, a second embodiment of the present invention will be described.

A characteristic feature of the present embodiment is that a diagnosis unit 160 that diagnoses a degradation state of a storage unit 110 including a nonvolatile memory is added into a vehicle control device 100.

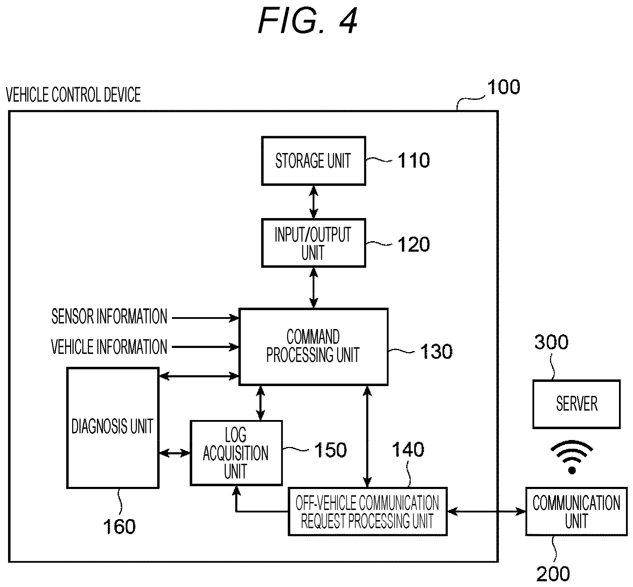

FIG. 4 is a diagram illustrating a configuration example of an information communication system to which the vehicle control device according to the present embodiment is applied. In the present embodiment, the same components as those of the first embodiment described above are denoted by the same reference signs, and a detailed description thereof will be omitted.

The diagnosis unit 160 diagnoses the degradation state of the storage unit 110 based on diagnostic log information of the storage unit 110 acquired by a log acquisition unit 150 (diagnosis step). The diagnosis unit 160 diagnoses the degradation state of the storage unit 110 in consideration of an error count and temperature information together with a total written data amount and a total read data amount with respect to the storage unit 110. The log acquisition unit 150 can determine whether or not to acquire the diagnostic log information of the storage unit 110 based on a diagnosis result of the diagnosis unit 160.

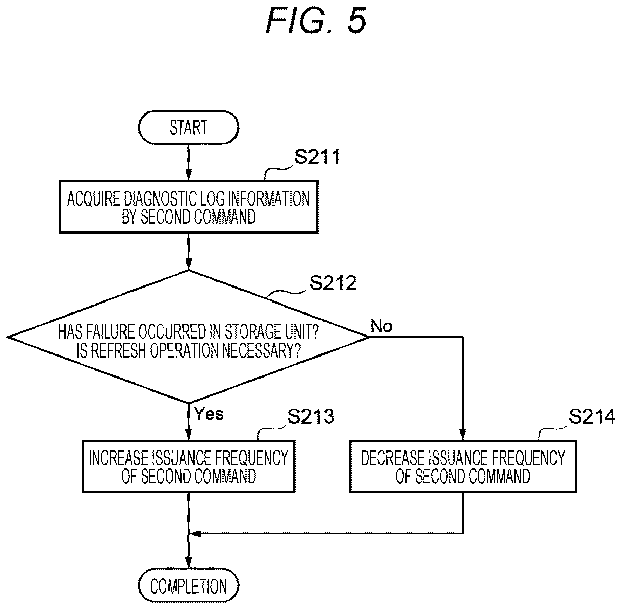

FIG. 5 is a diagram illustrating an example of an operation flow of the diagnosis unit of the vehicle control device according to the present embodiment.

The diagnosis unit 160 monitors lifespan degradation of the storage unit 110 based on the diagnostic log information acquired by the log acquisition unit 150, and adjusts an issuance frequency of a second command based on the lifespan degradation. The diagnosis unit 160 acquires the diagnostic log information from the storage unit 110 by the second command (S211). Then, it is determined based on the acquired diagnostic log information whether or not a failure has occurred in the storage unit 110 or whether or not a refresh operation of the storage unit 110 is necessary (S212).

In a case where a failure has occurred in the storage unit 110 or the refresh operation of the storage unit 110 is necessary, the issuance frequency of the second command is increased (S213). On the other hand, in a case where a failure has not occurred in the storage unit 110 and the refresh operation is unnecessary, the issuance frequency of the second command is decreased (S214).

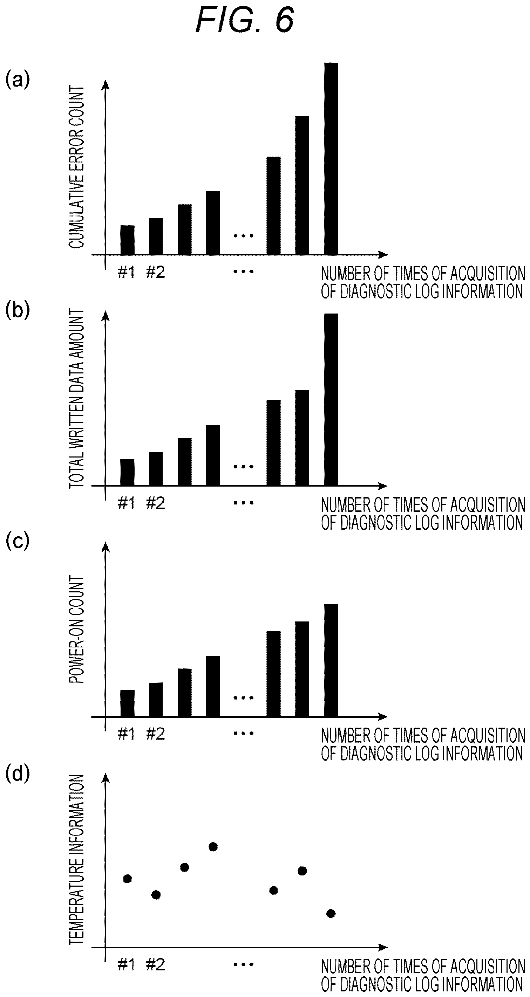

FIG. 6 is a graph illustrating a relationship between information acquired by the log acquisition unit of the vehicle control device according to the second embodiment of the present invention and the number of times of acquisition. FIG. 6(a) illustrates a relationship between the number of times of acquisition of the diagnostic log information and a cumulative error count, FIG. 6(b) illustrates a relationship between the number of times of acquisition of the diagnostic log information and the total written data amount, FIG. 6(c) illustrates a relationship between the number of times of acquisition of the diagnostic log information and a power-introduction count, and FIG. 6(d) illustrates a relationship between the number of times of acquisition of the diagnostic log information and the temperature information.

For example, in a case where the total access data amount to the storage unit 110 is small and the error count is increased, the diagnosis unit 160 diagnoses that there is a possibility that a failure has occurred in the storage unit 110, and sends an instruction to increase the issuance frequency of the second command to the log acquisition unit 150.

In addition, in a case where the total access data amount to the storage unit 110 is large and a temperature of the storage unit 110 continues to be high, the diagnosis unit 160 diagnoses that the storage unit 110 has been degraded and it is necessary to perform the refresh operation (data migration or the like) of the storage unit 110, and sends an instruction to increase the issuance frequency of the second command to the log acquisition unit 150. When the instruction to increase the issuance frequency of the second command is received from the diagnosis unit 160, the log acquisition unit 150 increases a frequency at which the second command is added to the first command and issued.

In addition, in a case where there is no increase in power-on count for the vehicle control device 100, the diagnosis unit 160 determines that a period in which power is not supplied is long and it is necessary to perform the refresh operation of the storage unit 110, and sends an instruction to increase the issuance frequency of the second command to the log acquisition unit 150. When the instruction to increase the issuance frequency of the second command is received from the diagnosis unit 160, the log acquisition unit 150 increases a frequency at which the second command is added to the first command and issued.

With the vehicle control device 100 of the present embodiment, the log acquisition unit 150 can determine whether or not it is necessary to acquire the diagnostic log information by using degradation information from the diagnosis unit 160. Therefore, a diagnosis timing for the storage unit 110 can be increased or decreased according to the degradation state of the storage unit 110. Therefore, the frequency of access to the storage unit 110 can be appropriately controlled, and both a long lifespan and a high reliability of the storage unit 110 can be achieved.

### [Third Embodiment]

Next, a third embodiment of the present invention will be described.

A characteristic feature of the present embodiment is that a log acquisition unit 150 is configured to acquire time information.

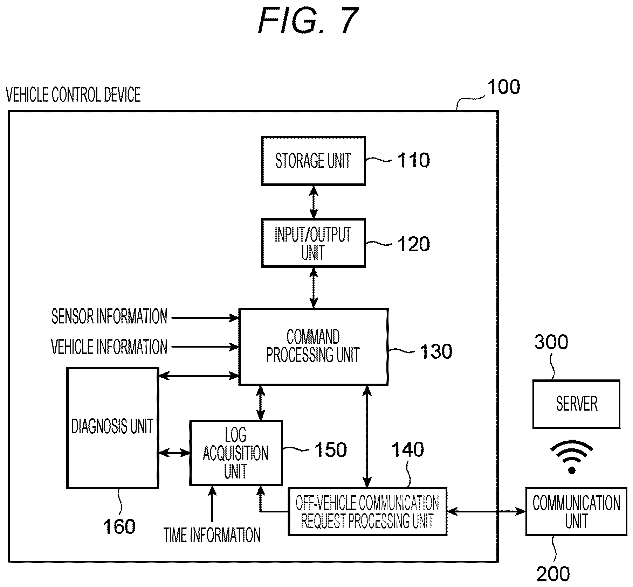

FIG. 7 is a diagram illustrating a configuration example of an information communication system to which a vehicle control device according to the present embodiment is applied. In the present embodiment, the same components as those of the respective embodiments described above are denoted by the same reference signs, and a detailed description thereof will be omitted.

The log acquisition unit 150 is configured to acquire the time information. The log acquisition unit 150 can calculate an elapsed time from previous issuance of a second command by acquiring the time information. Therefore, the number of elements for determining addition of the second command can be increased, so that the second command can be added even at time intervals.

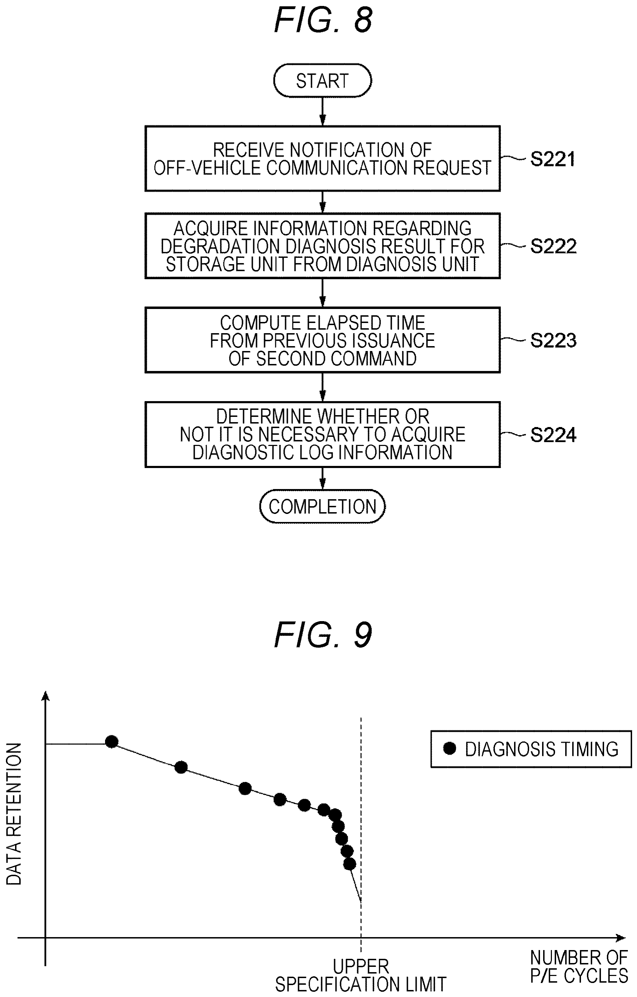

FIG. 8 is a diagram illustrating an example of an operation flow of the log acquisition unit of the vehicle control device according to the present embodiment.

When a notification of an off-vehicle communication request is received from an off-vehicle communication request processing unit 140 (S221), the log acquisition unit 150 acquires information regarding a degradation diagnosis result for a storage unit 110 from a diagnosis unit 160 (S222). Then, an elapsed time from the previous issuance of the second command is computed using the time information (S223). Then, whether or not it is necessary to acquire diagnostic log information is determined based on the degradation diagnosis result for the storage unit 110 from the diagnosis unit 160 and the elapsed time (S224).

In a case where the elapsed time from the previous log acquisition determination processing is equal to or longer than a predetermined time, the log acquisition unit 150 determines that it is necessary to acquire the diagnostic log information and can issue the second command. As a result, for example, even in a case where communication with an off-vehicle system is unavailable due to a communication failure or being inside a tunnel, the second command can be issued to acquire the diagnostic log information. In a case where the notification of the off-vehicle communication request has been received from a server 300 at an interval shorter than a predetermined time, it can be determined that it is unnecessary to acquire the diagnostic log information, and an access frequency to the storage unit 110 can be reduced to increase the lifespan.

The log acquisition unit 150 can adjust a diagnosis timing, that is, an issuance timing of the second command based on the time information. The log acquisition unit 150 can issue the second command at a low frequency when there is sufficient margin before the end of the lifespan of the storage unit 110, and can diagnose a degradation state of the storage unit 110 by issuing the second command at a high frequency when the storage unit 110 is close to the end of the lifespan.

FIG. 9 is a diagram illustrating an example of the diagnosis timing in the diagnosis unit of the vehicle control device according to the present embodiment. A horizontal axis of the graph illustrated in FIG. 9 represents the number of P/E cycles of the storage unit 110, and a vertical axis represents a data retention time of the storage unit 110. In the storage unit 110, as illustrated in the graph of FIG. 9, it can be seen that data retention decreases as the storage unit 110 becomes close to the end of the lifespan (upper specification limit). Therefore, by increasing a frequency of the diagnosis timings as the storage unit 110 becomes close to the end of the lifespan, it is possible to accurately diagnose the degradation state of the storage unit 110.

### [Fourth Embodiment]

Next, a fourth embodiment of the present invention will be described.

A characteristic feature of the present embodiment is that a command history of a first command is used for degradation diagnosis of a storage unit 110. In the present embodiment, the same components as those of the respective embodiments described above are denoted by the same reference signs, and a detailed description thereof will be omitted.

A diagnosis unit 160 is configured to acquire the command history of the first command. The command history may be read from a command processing unit 130 or may be read from the storage unit 110. The command history includes information regarding a type and an issuance date and time of the first command issued in the past.

The diagnosis unit 160 applies a weight indicating a degradation impact corresponding to the type of the first command, and diagnoses that degradation of the storage unit 110 is progressing, for example, in a case where the first command of a type whose degradation impact is large has been frequently issued.

The diagnosis unit 160 outputs the degradation impact to a log acquisition unit 150. The log acquisition unit 150 determines whether or not it is necessary to acquire diagnostic log information of the storage unit 110 based on the degradation impact and the command history. In a case where an accumulated value of the degradation impact exceeds a threshold, the log acquisition unit 150 determines that it is necessary to acquire the diagnostic log information of the storage unit 110 and additionally issues a second command.

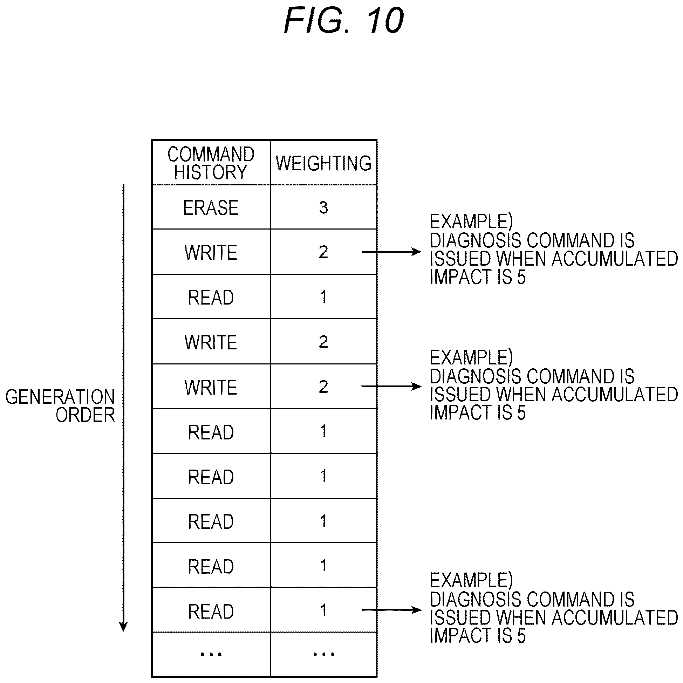

FIG. 10 is a diagram illustrating an example of a diagnosis method in the diagnosis unit of the vehicle control device according to the present embodiment. In the example illustrated in FIG. 10, there are three types of commands, that is, erase, write, and read. As the weight indicating the degradation impact of each command, 3 is set for erase, 2 is set for write, and 1 is set for read. The log acquisition unit 150 additionally issues the second command in a case where the accumulated degradation impact exceeds a threshold of 5.

With a vehicle control device 100 of the present embodiment, the log acquisition unit 150 determines whether or not to acquire the diagnostic log information of the storage unit 110 based on the command history and the degradation impact. Therefore, it is possible to diagnose the storage unit 110 according to the degradation impact.

### [Fifth Embodiment]

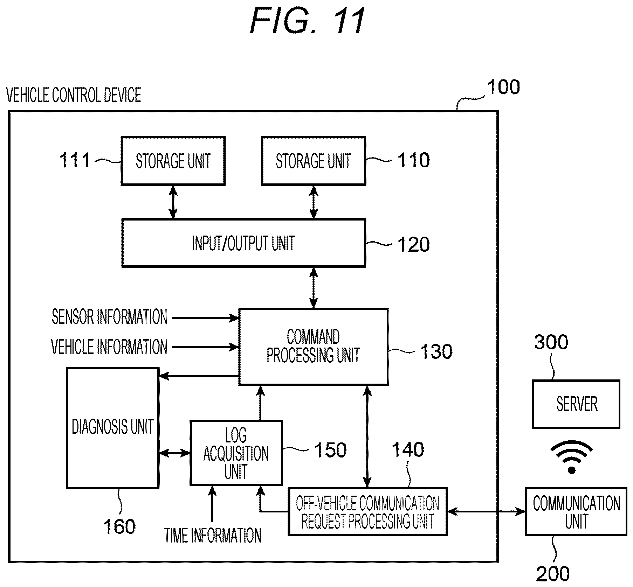

FIG. 11 is a diagram illustrating a configuration example of an information communication system to which a vehicle control device according to the present embodiment is applied.

In the respective embodiments described above, a case where there is one storage unit 110 has been described as an example, but a vehicle control device 100 may include a plurality of storage units 110 and 111. Even in a case where the plurality of storage units 110 and 111 are provided, log acquisition for each of the storage units 110 and 111 can be performed and degradation information of each of the storage units 110 and 111 can be acquired with the same constituent elements as in each of the above-described embodiments. In the present embodiment, with the above configuration, even in a case where the storage units 110 and 111 are provided, it is possible to implement a configuration for acquiring the degradation information without changing or increasing the configuration.

### [Sixth Embodiment]

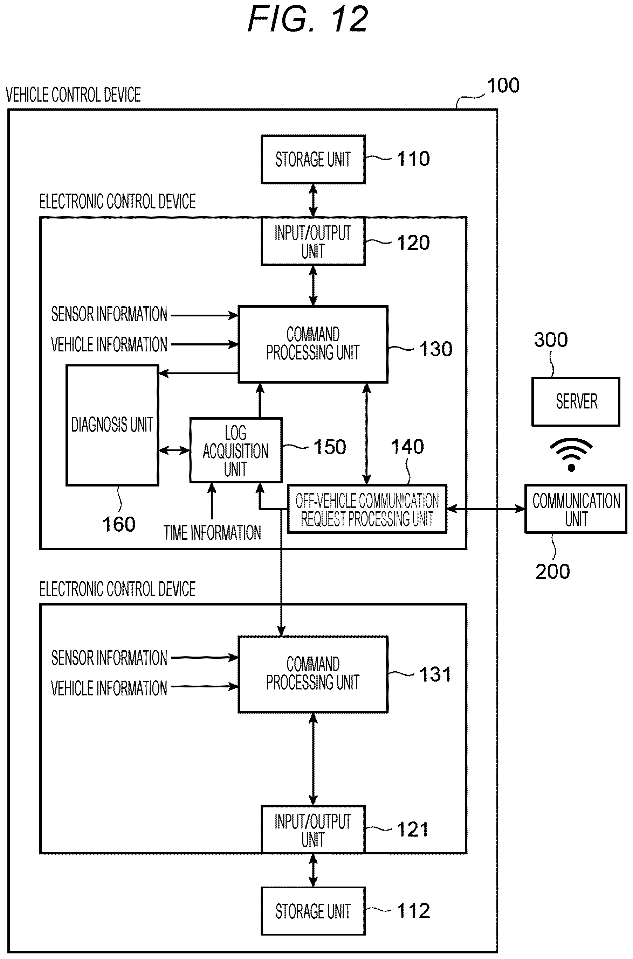

FIG. 12 is a diagram illustrating a configuration example of an information communication system to which a vehicle control device according to the present embodiment is applied.

In a case where there are a plurality of electronic control devices (SoCs) in a vehicle control unit (ECU) 100, and storage units 110 and 112 are connected to the respective electronic control devices, an off-vehicle communication request processing unit 140, a log acquisition unit 150, and a diagnosis unit 160 may be provided in any one or all of the plurality of electronic control devices.

In the present embodiment, with the above configuration, degradation information of each of the storage units 110 and 112 can be acquired by any one of the plurality of electronic control devices, and thus, the effects described in the first to third embodiments can be achieved without additional resources.

### [Seventh Embodiment]

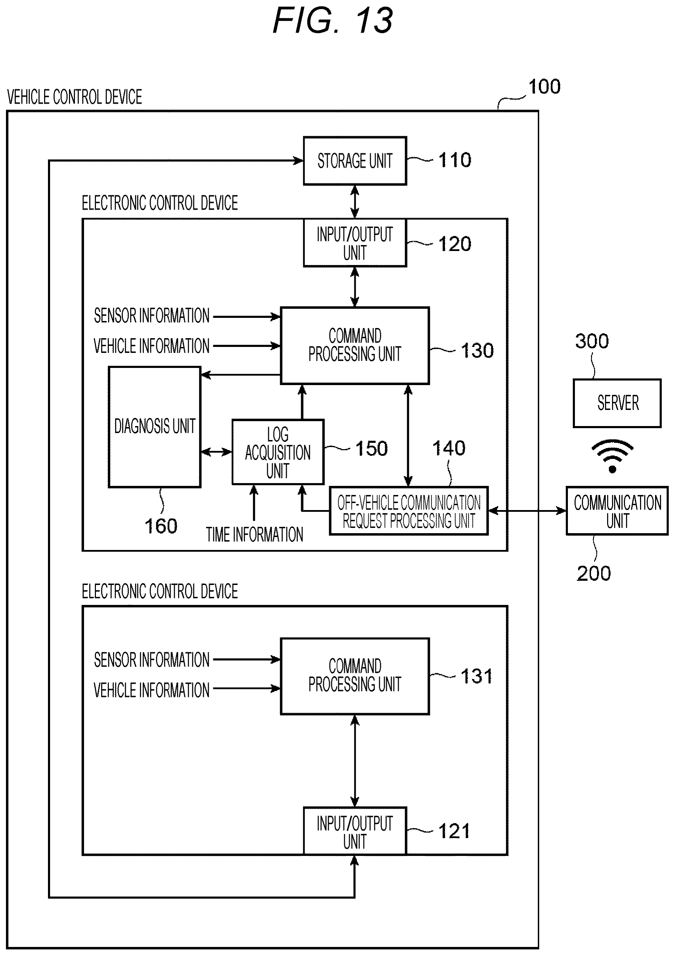

FIG. 13 is a diagram illustrating a configuration example of an information communication system to which a vehicle control device according to the present embodiment is applied.

This is an example of a case where there are a plurality of electronic control devices (SoCs) in a vehicle control unit (ECU) 100 and a storage unit 110 is shared. An off-vehicle communication request processing unit 140, a log acquisition unit 150, and a diagnosis unit 160 may be provided in any one or all of the plurality of electronic control devices. In addition, the plurality of electronic control devices may be connected to the storage unit 110 via a switch device. In the present embodiment, with the above configuration, degradation information of the shared storage unit 110 can be acquired by a command from any one of the plurality of electronic control devices, so that resources of the electronic control device can be reduced.

Although the embodiments of the present invention have been described in detail above, the present invention is not limited to the configurations of the above embodiments, and various design changes can be made without departing from the gist of the present invention described in the claims. For example, the above-described embodiments have been described in detail in order to describe the present invention in an easy-to-understand manner, and the present invention is not necessarily limited to those having all the described configurations. Further, a part of a configuration of one embodiment can be replaced with a configuration of another embodiment, and a configuration of one embodiment can be added to a configuration of another embodiment. Furthermore, a part of a configuration of each embodiment can be added with another configuration, can be deleted, or can be replaced with another configuration.

### Reference Signs List

100 vehicle control device
200 communication unit (communication device)
300 server/PC/cloud
110, 111, 112 storage unit
120, 121 input/output unit
130, 131 command processing unit
140 off-vehicle communication request processing unit
150 log acquisition unit
160 diagnosis unit

## Claims

1. A vehicle control device connected to a communication device that communicates with an off-vehicle device, the vehicle control device comprising:
a storage unit that includes a nonvolatile memory;
a command processing unit that issues a command to the storage unit;
an input/output unit that exchanges information with the storage unit based on the command issued by the command processing unit;
an off-vehicle communication request processing unit that performs processing on an off-vehicle communication request for an off-vehicle device; and
a log acquisition unit that acquires diagnostic log information output from the storage unit by the input/output unit, wherein
the log acquisition unit performs necessity determination as to whether or not it is necessary to acquire the diagnostic log information of the storage unit in response to the off-vehicle communication request with the off-vehicle device, and
in a case where the log acquisition unit determines that it is necessary to acquire the diagnostic log information of the storage unit, the command processing unit issues a second command for acquiring the diagnostic log information of the storage unit by adding the second command to a first command for exchanging information according to the off-vehicle communication request with the off-vehicle device.

2. The vehicle control device according to claim 1, comprising a diagnosis unit that diagnoses a lifespan degradation state of the storage unit based on the diagnostic log information of the storage unit acquired by the log acquisition unit.

3. The vehicle control device according to claim 1, wherein the log acquisition unit performs necessity determination as to whether or not it is necessary to acquire the diagnostic log information of the storage unit based on at least one of the number of communications with the off-vehicle device and a type of the command.

4. The vehicle control device according to claim 2, wherein
the diagnosis unit determines whether or not a failure has occurred in the storage unit based on a total access data amount to the storage unit and an error count in the storage unit, and
the log acquisition unit increases a frequency at which the second command is added to the first command and issued in a case where it is determined that a failure has occurred in the storage unit.

5. The vehicle control device according to claim 2, wherein
the diagnosis unit determines whether or not the storage unit has been degraded based on a total access data amount to the storage unit and a temperature of the storage unit, and
the log acquisition unit increases a frequency at which the second command is added to the first command and issued in a case where it is determined that the storage unit has been degraded.

6. The vehicle control device according to claim 1, wherein the log acquisition unit determines whether or not it is necessary to acquire the diagnostic log information of the storage unit based on a degradation impact corresponding to the type of the command and a history of the command.

7. The vehicle control device according to claim 2, wherein the log acquisition unit determines whether or not to acquire the diagnostic log information of the storage unit based on a diagnosis result of the diagnosis unit.

8. An information communication system comprising:
a server that is an off-vehicle device; and
a vehicle control device that is connected to a communication device that communicates with the server, wherein
the vehicle control device includes:
a storage unit that includes a nonvolatile memory;
a command processing unit that issues a command to the storage unit;
an input/output unit that exchanges information with the storage unit based on the command issued by the command processing unit;
an off-vehicle communication request processing unit that performs processing on an off-vehicle communication request with the server; and
a log acquisition unit that acquires diagnostic log information of the storage unit in response to the off-vehicle communication request with the server,
the log acquisition unit performs necessity determination as to whether or not it is necessary to acquire the diagnostic log information of the storage unit in response to the off-vehicle communication request with the off-vehicle device, and
in a case where the log acquisition unit determines that it is necessary to acquire the diagnostic log information of the storage unit, the command processing unit issues a second command for acquiring the diagnostic log information of the storage unit by adding the second command to a first command for exchanging information according to the off-vehicle communication request with the off-vehicle device.

9. A degradation diagnosis method for a nonvolatile memory included in a vehicle control device connected to a communication device that communicates with an off-vehicle device, the degradation diagnosis method comprising:
an acquisition determination step of determining whether or not it is necessary to acquire diagnostic log information of a storage unit including the nonvolatile memory in response to an off-vehicle communication request with the off-vehicle device;
a diagnostic log information acquisition step of acquiring the diagnostic log information of the storage unit in a case where it is determined in the acquisition determination step that it is necessary to acquire the diagnostic log information; and
a diagnosis step of diagnosing a degradation state of the storage unit based on the diagnostic log information acquired in the diagnostic log information acquisition step.
